# EUROPÄISCHE PATENTSCHRIFT

(11) **EP 2 683 953 B1**
(45) Veröffentlichungstag und Bekanntmachung des Hinweises auf die Patenterteilung: **25.10.2017**
(21) Anmeldenummer: 12709511.5
(22) Anmeldetag: 07.03.2012
(51) Int. Cl.: F16B 13/06, F16B 13/14

(54) **ANKER-BEFESTIGUNGSELEMENT**
ANCHOR FASTENING ELEMENT
ÉLÉMENT DE FIXATION À TIGE D'ANCRAGE

(30) Priorität: 08.03.2011 DE 102011012955
(43) Veröffentlichungstag der Anmeldung: 15.01.2014
(73) Patentinhaber: Karlsruher Institut für Technologie, 76131 Karlsruhe (DE)
(72) Erfinder: STEMPNIEWSKI, Lothar, 76275 Ettlingen (DE); MAISCH, Marco, 76275 Ettlingen (DE)
(74) Vertreter: Blumbach Zinngrebe
(86) Internationale Anmeldenummer: PCT/EP2012/001007
(87) Internationale Veröffentlichungsnummer: WO 2012/119763

(56) Entgegenhaltungen:
- EP-A1- 0 289 729
- DE-A1- 3 445 713
- DE-C1- 3 320 460

## Beschreibung

Die Erfindung bezieht sich auf ein Anker-Befestigungselement zur Befestigung eines Gegenstandes in einem Bohrloch eines Betonteils als Ankergrund.

Dübel zur Befestigung von Gegenständen an Gebäudewänden sind in mannigfaltiger Form bekannt. Wenn außergewöhnliche Belastungen zu erwarten sind, werden unter anderem Spreizanker verwendet, die sehr steife Befestigungsmittel darstellen und als solche wenig Nachgiebigkeit zeigen und so zu einer starren Verbindung zwischen dem zu befestigenden Gegenstand und der Gebäudewand führen. Eine starre Verbindung zeigt kein energiedissipierendes Verhalten.

Aus DE 40 14 522 A1 ist ein Befestigungselement zum Verankern in einem Bohrloch eines Betonteils bekannt geworden, das zur Vermeidung eines Bohrlochausbruches oder Abreißen des Bolzens in der Lage ist, Stoßbelastungen zu absorbieren, wie sie bei heftigen Erschütterungen oder Erdbeben auftreten. Das Befestigungselement umfasst einen Gewindebolzen, der an seinem freien Ende einen Spreizkonus aufweist, und eine Spreizhülse mit Längsschlitzen zur Bildung von Spreizsegmenten. Der Gewindebolzen umfasst einen Gewindeabschnitt, der sich bis weit in die Spreizhülse fortsetzt, dann einen bundförmigen Abschnitt mit dem Durchmesser der Innenbohrung der Spreizhülse und schließlich eine flache Einschürung vor dem Spreizkonus. Die Innenbohrung der Spreizhülse weist überdeckend mit dem Spreizkonus einen zylindrischen Abschnitt erhöhter Wandstärke auf, und die Wandstärke vermindert sich über der flachen Einschnürung und geht in die Ausgangswandstärke der Spreizhülse über. Dadurch wird ein flacher Ringraum gebildet, in den sich der Spreizkonus bei axialer Überlast hineinverformen kann, um die stoßartige Überlast zu absorbieren. Dabei rutscht der Gewindebolzen ein Stück aus der Spreizhülse heraus und der zu befestigende Gegenstand rückt von der Wand ab, in dem das Befestigungselement verankert ist. Es wird nur wenig Energie bei der Verformung der Spreizhülse aufgenommen.

Aus DE 37 109 64 A ist ein Befestigungselement für den Einsatz in einem Bohrloch eines massiven Mauerwerks bekannt, bei dem ein Gewindebolzen einen Spreizkörper am Ende aufweist und mit einer Spreizhülse zusammenarbeitet, die zwei hintereinander angeordnete Spreizbereiche aufweist, die über einen Sollbruchbereich miteinander verbunden sind, der bei Überlast durchbricht. Auf diese Weise wird vermieden, dass das Befestigungselement sich vom Bohrloch löst, auch wenn heftige Erschütterungen wie bei Erdbeben auftreten.

Aus DE 93 103 57 U ist ein Spreizdübel zur Befestigung in einer Verankerungsbohrung bekannt, bei der ein Spreizabschnitt der Dübelhülse aufgeweitet wird, und zwar mit einer Nachlaufreserve, die durch eine von innen ausgenommene Wandstärkenverringerung gebildet wird, die bei greifendem Spreizabschnitt der Dübelhülse plastisch verformbar ist und zu einer Verkürzung der Dübellänge führt.

Im Zusammenhang mit Spreizankern ist eine Dämpfungsvorrichtung (DE 10 2008 063 580 A1) bekannt, mit der stoßartige Belastungen, etwa bei Erdstößen, gedämpft werden sollen. Eine Elastomerhülse umschließt den Gewindebolzen des Spreizankers und wird beim Anziehen der Mutter gestaucht, so dass die Elastomerhülse in einer Bohrung des zu befestigenden Bauteils spielfrei vorgespannt ist.

Eingeklebte Verbundanker sind vielfach bekannt (DE 202 01 927 U1, EP 1 936 212 A2).

Ein für den Einsatz in erdbebengefährdeten Gebieten konzipiertes Befestigungselement ist aus EP 0 289 729 A1 bekannt und umfasst einen Gewindebolzen mit einem Gewinde an einem Ende zur Befestigung von Lasten und mit einer Schraubenstange am anderen Ende, auf der ein Spreizkörper verschieblich sitzt, der in eine Spreizhülse eingreift und dabei von einer Druckfeder belastet wird. Bei Auftreten der Überlast wird die Druckfeder zusammengepresst und wirkt als Kraftspeicher zum Auffangen der Erschütterungen bei Erdbeben.

Aus DE 33 20 460 C1 ist ein Gebirgsanker bekannt, der ein Zugglied mit Enden aus Normalstahl sowie eine mittig angeordnete Nachgiebigkeitszone mit verringertem Durchmesser und aus rostfreiem, austenitischem Stahl enthält, um das Gebirge mittels einer Ankerplatte in Strecken und Räumen des untertägigen Berg- und Tunnelbaus gegen Ausbrechen zu halten. Die Enden des Zuggliedes sind mit dem Gebirge über Kleber verbunden. Um eine hohe Einstellkraft zu erzielen, wird der austenitische Anker-Mittelteil durch Strecken kaltverfestigt.

Die DE 34 45 713 A1 offenbart einen Spreizanker, dessen Zugstange zwischen Gewindeabschnitt und Spreizkegel mit verringertem Durchmesser ausgebildet ist. Der Spreizkegel arbeitet mit einer Kegelhülse zusammen, die wiederum mit einer Spreizhülse zusammen wirkt. Es sollen hohe Verankerungswerte erzielt werden.
Der Erfindung liegt die Aufgabe zugrunde, ein Befestigungselement zur Befestigung eines Gegenstandes in einem Bohrloch eines Betonteils zu schaffen, bei dem heftige Stoßbelastungen, wie sie etwa bei Erdbeben auftreten, energiedissipierend aufgenommen werden sollen.

Diese Aufgabe wird durch ein Anker-Befestigungselement mit den Merkmalen des Anspruchs 1 gelöst.

Das Befestigungselement umfasst einen Gewindebolzen mit einem Gewindeabschnitt an einem Ende, mit einem Ankerkörper am anderen Ende sowie mit einem Schaftabschnitt dazwischen. Der Gewindebolzen besteht aus Metall mit niedrigem Duktilitätsverhalten in seinem Gewindeabschnitt und mit höherem Duktilitätsverhalten in seinem Schaftabschnitt. Der Ankerkörper, der einstückig oder getrennt zu dem Gewindebolzen ausgebildet ist, ist wenig duktil. Mittels einer Mutter, ggf. unter Zuhilfenahme einer Ankerplatte, können Gegenstände an einer Wand oder dergleichen befestigt werden. Bei auftretenden Erdbeben können Massenkräfte auftreten, welche den Gewindebolzen in Längsrichtung und/oder in Querrichtung beaufschlagen und so heftig sind, dass die Elastizitätsgrenze des Materials überschritten wird. Es kommt dann zu einer plastischen Verformung nur im Schaftabschnitt des Gewindebolzens, wodurch Stoßenergie aufgenommen wird, ohne dass es zu einem plötzlichen Abriss des Gewindebolzens kommt.

Das Anker-Befestigungselement ist für reversible Lasten ausgelegt, bei der auf eine Belastung eine Entlastung folgt mit anschließender Wiederbelastung usw. Dabei treten beliebige Kombinationen von Zugkraft zu Querkraft auf. Es kann vorkommen, dass die Querkraft auch ohne Zugkraft in Längsrichtung des Ankers auftritt. Ein Freiraum um den Schaftabschnitt ermöglicht ständiges Verbiegen des Schaftabschnittes und damit die Energieaufnahme aus quer zum Schaft laufenden Erdbebenwellen.

Um zu dem gewünschten Duktilitätsverhalten des Schaftabschnittes zu gelangen, ist es zweckmäßig, diesen Schaftabschnitt mit verringertem Querschnitt gegenüber dem Querschnitt des Gewindeabschnitts und dem Querschnitt des Ankerabschnitts auszubilden. Damit kann die Dehnungsduktilität und die Krümmungsduktilität des Schaftabschnittes zu Zwecken der Energiedissipation bei Erdbeben ausgenutzt werden.

Um die Krümmungsduktilität bzw. die Verschiebeduktilität des Schaftabschnittes zu den angegebenen Zwecken auszunutzen, wird ein radialer Freiraum um den Schaftabschnitt im Bohrloch wenigstens nahe des Gewindeabschnitts geschaffen. Der Schaftabschnitt kann sich dann innerhalb des Bohrloches wie ein eingespannter Träger biegen, und beim Überschreiten der Biege-Elastizitätsgrenze Energie aus der Erdbebenwelle aufnehmen, ohne dass es zu einem gefährlichen Abriss des Gewindebolzens kommt.

Wenn die Duktilität eines Tragelementes in Frage steht, spricht man von globaler Duktilität, da es nicht nur auf das Material, sondern auch auf die Form und die Belastungsart des Tragelements ankommt (vgl. z. B. Hugo Bachmann, "Erdbebensicherung von Bauwerken", 2. überarbeitete Auflage, Kapitel 3.5, Birkenhäuser Verlag, 2002, ISBN 3-7643-6941-8). Diese globale Duktilität soll mindestens 1,5 betragen, d.h. das Verhältnis des Betrages der plastischen Verformung zum Betrag der elastischen Verformung ist größer als 1,5. Für normale Dübel für Erdbebegebiete wird ein Bereich von 2 - 4 der globalen Duktilität vorgeschlagen. In besonders wichtigen Konstruktionen wird die globale Duktilität größer 4 oder 5 gewählt.

Der Ankerabschnitt ist nicht duktil oder wenig duktil und kann z.B. durch Klebung am Bohrlochende befestigt sein, oder es ist eine Dübelhülse mit Spreizsegmenten vorgesehen, welche den Ankerabschnitt des Gewindebolzens am Bohrlochgrund festlegt. In letzterem Fall wird das Befestigungselement als Spreizanker bezeichnet.

Der neue Spreizanker umfasst somit einen Gewindebolzen mit einem Gewindeabschnitt am ersten Ende, mit einem Spreizabschnitt am anderen, zweiten Ende und mit einem Schaftabschnitt dazwischen. Es ist eine Dübelhülse mit rundzylindrischem Querschnitt und mit Spreizsegmenten an dem dem Spreizabschnitt benachbarten Ende vorgesehen. Eine Mutter, ggf. mit Unterlegscheibe, dient zur Befestigung einer Ankerplatte und damit des zu befestigenden Gegenstandes am Spreizanker und Ankergrund. Der Schaft des Gewindebolzens weist innerhalb der Dübelhülse sich erstreckend einen Dehnungsabschnitt verringerten Querschnitts auf. Wenigstens der Schaft besteht aus duktilem Material, das sich bei Überschreiten einer kritischen Belastung plastisch verformen kann und dabei Bewegungsenergie absorbiert und in Verformungsenergie umwandelt. Auf den Spreizanker einwirkende Querkräfte können durch plastische Biegeverformung des Schaftes abgemildert werden, während übermäßige axiale Kräfte in einer Dehnungsverformung des Schafts abgebaut werden. Insgesamt wird dadurch auf den befestigten Gegenstand einwirkende Stoßenergie teilweise aufgezehrt, so dass die Gefahr der Beschädigung des Bohrloches vermindert wird. Während des kurzzeitigen Auftretens von Erdbebenstößen kann insbesondere sich zwar der Gewindebolzen des Spreizankers längen, wodurch der befestigte Gegenstand noch gehalten wird, aber er reißt während der kurzen Einwirkungszeit des Erdbebens nicht ab. In gleicher Weise führen stoßartige Querkräfte zum Verbiegen des aus duktilem Material bestehenden Schaftes, dieser wird aber nicht abgeschert. Somit wird der Gefahr des Herumfliegens von befestigten Gegenständen beim Auftreten von Erdstößen begegnet.

Der Spreizanker stellt einen Schwerlastdübel dar und kann in zwei Bauformen konzipiert werden, nämlich zur Befestigung in einem zylindrisch hergestellten Bohrloch oder in einem solchen mit zusätzlichem Hinterschnitt. Die beiden Bauformen unterscheiden sich in dem Ausmaß der Spreizbewegung der Spreizsegmente. Bei einem rein zylindrischen Bohrloch brauchen die Spreizsegmente nur wenig gespreizt werden, um sich an der Wandung des Bohrlochs festzukrallen und dadurch bei der Montage des Spreizankers der Gefahr zu entgehen, beim Anziehen des Gewindebolzens den Spreizanker aus dem Bohrloch zu ziehen. Bei einem Bohrloch mit Hinterschnitt wird eine größere Spreizung der Spreizsegmente angewandt, wodurch die Haltekraft des Spreizankers im Bohrloch sehr stark erhöht wird bei gleichzeitiger Verminderung der Gefahr des Herausreißens des Spreizankers aus dem Bohrloch.

Für beide Bauformen wird eine Dübelhülse bevorzugt, die vor dem Einbau über den gesamten Außenumfang, bis auf eine Biegekerbe für die Spreizsegmente, zylindrisch ist. Zur Unterstützung der Spreizfunktion der Spreizsegmente ist am Innenumfang der Dübelhülse im Bereich der Spreizsegmente eine Wandverdickung vorgesehen, die sich wenigstens teilweise an den Spreizabschnitt anschmiegt, um bei der Montage des Spreizankers durch axiale Relativverschiebung zwischen der Dübelhülse und dem Spreizabschnitt die Spreizung der Spreizsegmente reibungsarm zu erzielen. Das Ausmaß der axialen Relativverschiebung unterscheidet sich je nach Bauart: bei zylindrischem Bohrloch ohne Hinterschnitt ist das Ausmaß der Relativverschiebung klein und bei zylindrischem Bohrloch mit Hinterschnitt groß.

Für das optimale Verhalten des Spreizankers ist es wichtig, dass die duktile Materialeigenschaft im Wesentlichen auf den Schaftabschnitt des Gewindebolzens konzentriert ist, während der Gewindeabschnitt und der Spreizabschnitt gegenüber dem duktilen Material härter sein sollten. Dies trifft auch auf die Dübelhülse zu. Auf diese Weise wird dafür gesorgt, dass die Energiedissipation im Wesentlichen in dem duktilen Schaft erfolgt.

Als geeignetes Material für den Gewindebolzen kann Schmiedeeisenstahl angesehen werden, der im Bereich des Gewindeabschnittes und des Spreizabschnitts gehärtet werden kann, aber im Bereich des Schaftabschnittes ungehärtet belassen wird. Unter Schmiedeeisenstahl sollen alle Eisenlegierungen verstanden werden, die streckfähig verformbar sind und in Abschnitten gehärtet werden können, während andere Abschnitte ungehärtet verbleiben.

Als Material des Gewindebolzens des Spreizankers sind auch Kupferlegierungen geeignet, beispielsweise Bronze oder Messing.

Für die Dübelhülse wird festes Material, wie Stahl bevorzugt. Es kann aber auch Anwendungsfälle geben, bei denen man duktiles Material für die Dübelhülse wählt, um auch dort Energiedissipation zu erzielen. Auch zähe Kunststoffe können als Material der Dübelhülse in Betracht kommen, um gewissen Anforderungen auf Wasserdichtigkeit und dergleichen zu genügen.

Der Spreizabschnitt, der aus härterem Material als dem duktilen Material des Bolzenschaftes besteht, ist kegelförmig und mit einem Ansatz zum Dehnungsabschnitt hin ausgebildet. Es ist möglich, als Spreizabschnitt einen Spreizkörper am zweiten Ende des Gewindebolzens anzuschrauben oder mittels Schraubgewinde axial zu verschieben. Diese Gestaltung kann den Austausch eines verformten Gewindebolzens nach Eintritt eines Erdbebens erleichtern, wenn die Erneuerung der Befestigung eines gelockerten Gegenstandes ansteht.

Ausführungsbeispiele der Erfindung werden anhand der Zeichnungen beschrieben. Dabei zeigt:
- Fig. 1: einen Längsschnitt durch einen Spreizanker im eingebauten Zustand,
- Fig. 1a: eine Einzelheit aus Fig. 1,
- Fig. 2: einen dehnungsverformten Spreizanker
- Fig. 3: einen biegungsverformten Spreizanker und
- Fig. 4: einen Klebeanker.

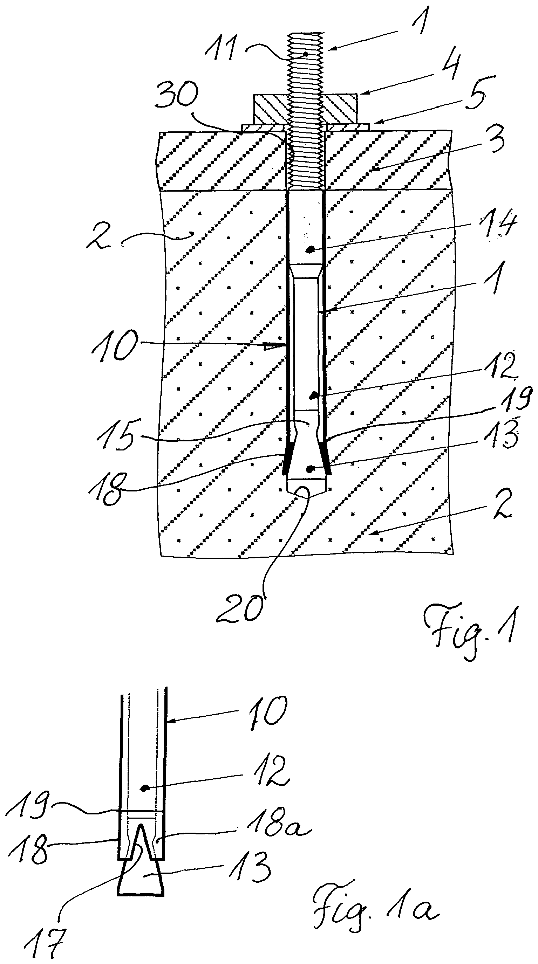

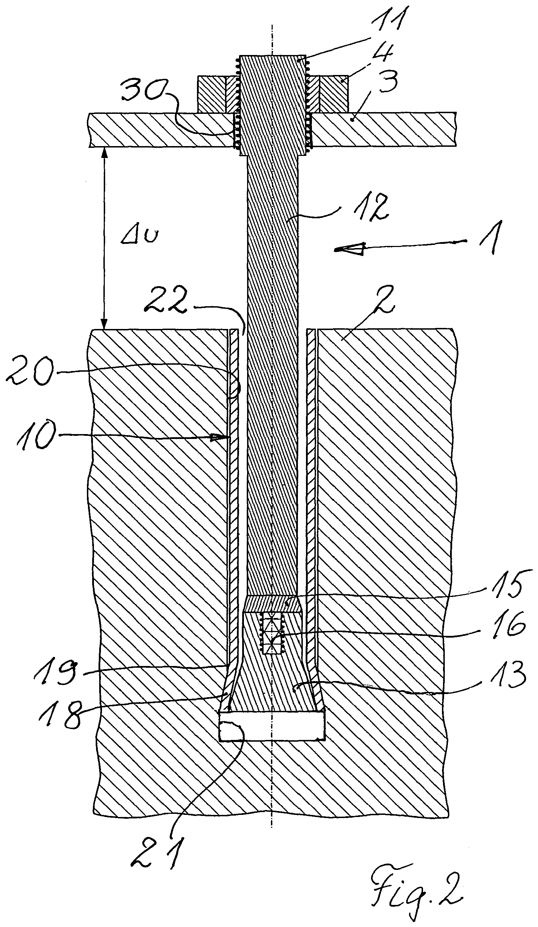

Fig. 1 zeigt den Einbau eines Spreizankers in einer Bohrung 20 einer Betonwand 2, um einen Gegenstand, von dem eine Ankerplatte 3 mit Durchsteckbohrung 30 dargestellt ist, an der Wand 2 zu befestigen. Hierzu wird eine Mutter 4 und eine Unterlegscheibe 5 verwendet, die die Ankerplatte 3 an die Wand 2 pressen. Der Spreizanker besteht aus einer Dübelhülse 10 und einem Gewindebolzen 1. Der Gewindebolzen 1 weist mehrere Abschnitte auf, nämlich einen Gewindeabschnitt 11, einen Schaft- oder Dehnungsabschnitt 12 und einen Spreizabschnitt 13. Ein Stützabschnitt 14 kann zur Verbindung des Gewindeabschnittes 11 mit dem Schaft 12 vorgesehen sein. Wenn es auf gute Duktilität in Querkraftrichtung ankommt, wird der Stützabschnitt 14 fortgelassen, um einen Freiraum 22 um den Schaftabschnitt 12 des Gewindebolzens zu schaffen, wie es in Fig. 2 dargestellt ist. Der Stützabschnitt 14 (falls vorhanden) weist einen Außendurchmesser entsprechend dem Innendurchmesser der Dübelhülse 10 auf. Demgegenüber hat der Schaft- oder Dehnungsabschnitt 12 einen verringerten Querschnitt, der im Bereich von 70 bis 90% des Vollquerschnitts liegen kann. Der Spreizabschnitt 13 ist über einen Ansatz 15 mit dem Dehnungsabschnitt 12 verbunden und weist, abgesehen von dem Ansatz 15, eine Konus- oder Kegelform auf, deren Basisquerschnitt dem Querschnitt der Bohrung 20 entspricht. Die Dübelhülse 10 ist an ihrem dem Spreizabschnitt benachbarten Ende geschlitzt, wobei die Schlitze 17 (Fig. 1a) Dreieckform aufweisen können, aber auch andere Schlitzformen möglich sind, z.B. mit kreisförmiger Erweiterung am Schlitzgrund. Durch diese Schlitze 17 wird das untere Ende der Dübelhülse 10 in einzelne Spreizsegmente 18 unterteilt, die gegenüber dem Rest der Dübelhülse 10 durch eine Biegekerbe 19 abgeteilt sein können. Die Innenseite der Dübelhülse 10 kann gleichmäßig rundzylindrisch sein, es ist aber auch möglich, eine Wandverdickung 18a im Bereich der Spreizsegmente 18 vorzusehen. Die Wandverdickung folgt wenigstens teilweise in ihrem Umriss dem Umriss des Spreizkörpers 13 und vermeidet das Eingraben der Spreizsegmentenden in den Spreizkörper beim Aufspreizen der Spreizsegmente.

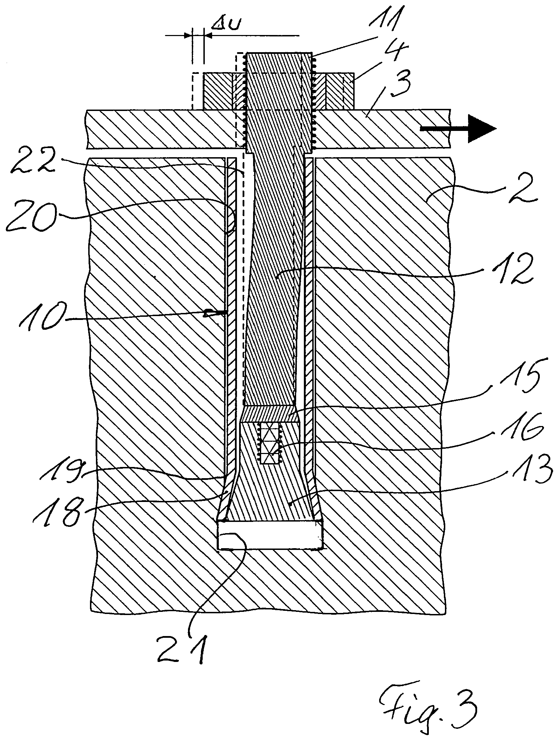

Fig. 2 zeigt eine weitere Ausführungsform eines Spreizankers, und zwar in dessen längs gedehntem Zustand. Der Ausführungsform nach Fig. 1 entsprechende Teile sind mit den gleichen Bezugszeichen belegt. Der dargestellte Spreizanker ist für ein Bohrloch 20 mit Hinterschnitt 21 ausgelegt. Ferner ist der Gewindebolzen 1 zweiteilig ausgebildet, indem nämlich der Spreizabschnitt 13 mittels eines Gewindestutzens 16 an den Ansatz 15 des Gewindebolzens 1 angeschraubt ist. Während der Schaftabschnitt 12 aus duktilem Material besteht, sind die Bereiche 11, 15, 16, 13 demgegenüber wenig duktil. Im Unterschied zur Ausführungsform nach Fig. 1 fehlt der Stützabschnitt 14, so dass es zu einem radialen Freiraum 22 zwischen Schaftabschnitt 12 und der Dübelhülse 10 kommt. Am Eintrittsende zu dem Freiraum 22 kann ein Führungsring (nicht dargestellt) vorgesehen sein, der aus zerquetschbarem Material besteht, um seitliche Verschiebung des Schaftes 12 zu ermöglichen, wie dies in Fig. 3 dargestellt ist. Diese zeigt den Spreizanker nach Fig. 2 mit verbogenem Schaftabschnitt 12, wie dies durch Stoßkräfte quer zur Längserstreckung des Ankers zustande kommen kann.

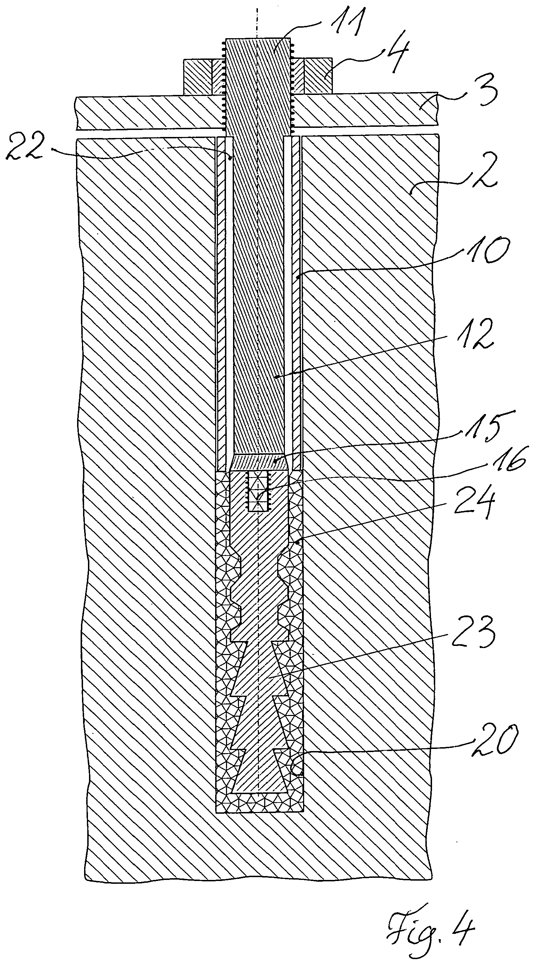

Fig. 4 zeigt einen Klebeanker mit Ankerabschnitt 23, der mit einem Schaft 12 eines Gewindebolzens verbunden ist, welcher als Ankerbefestigungselement dient. Der Ankerabschnitt 23 ist mittels Klebstoff 24 in der Bohrung 20 einer Betonwand 2 eingeklebt. Die Form des Ankerabschnittes 23 ist diesem Zweck angepasst. Die restlichen Teile entsprechen dem Gewindebolzen 1 nach Fig. 1 oder 2.

Die Besonderheit des Anker-Befestigungselementes nach der Erfindung ist die Verwendung von gesteigert duktilem Material für gewisse Teile oder Bereiche des Elementes. Unter einem duktilen Material wird ein solches verstanden, das bis zu einer bestimmten Belastung, der Streckgrenze, elastisches Verhalten zeigt und bei Überschreitung der Streckgrenze bis zur Bruchgrenze hin plastisch verformbar ist. Duktilität kennzeichnet das Verhältnis zwischen Höchstmaß der Verformung und elastischer Verformung eines Materalkörpers. Im Zusammenhang mit der Erfindung sollen unterschiedliche Abschnitte des Anker-Befestigungselements unterschiedliches duktiles Verhalten aufweisen, sei es, dass zwei verschiedene duktile Materialien verwendet werden, sei es, dass das jeweilige Teil durch unterschiedliche Bemessung oder unterschiedliche Behandlung seiner Abschnitte sich wie verschiedene duktile Materialien verhält.

Als Material des Gewindebolzens 1 eignet sich besonders Schmiedeeisenstahl, d.h. ein Stahl mit niedrigem Kohlenstoffgehalt. Durch Aufkohlung im Bereich des Gewindeabschnittes 11 und des Spreizkörpers 13 kann die Härte des Materials erhöht und damit die Verformbarkeit (lokale Duktilität) herabgesetzt werden, so dass ein Gewindebolzen wie aus zwei verschiedenen duktilen Materialien entsteht. Der ungehärtet belassene Schaft oder Dehnungsabschnitt 12 weist eine wesentlich höhere Duktilität gegenüber dem Gewindeabschnitt 11 oder dem Spreizkörper 13 auf, damit die Verformung des Anker-Befestigungselements bei Überlast im Wesentlichen nur in dem Schaftbereich erfolgt.

Als duktiles Material für den Gewindebolzen 1 eignet sich auch eine Kupferlegierung wie Bronze oder Messing. Auch solches Material kann durch geeignete Behandlung in Abschnitte unterschiedlicher Festigkeit und damit unterschiedlicher Duktilität erhalten werden.

Was das Material der Dübelhülse 10 angeht, wird man vor allem Stahl in Betracht ziehen. Dessen Festigkeit schützt bei starker Belastung in Längs- und Querrichtung gegen Ausbrechen des Bohrlochs 20, so dass die eingeleitete Verformungsenergie sich im Wesentlichen im Schaft bemerkbar macht.

Wenn ein Teil der Stoßenergie bei einem Erdbeben auch von der Dübelhülse aufgenommen werden soll, wird man auch eine Kupferlegierung wie Bronze oder Messing als Material der Dübelhülse in Betracht ziehen. Kupferlegierungen sind sehr duktil und deshalb in der Lage Stoßenergie durch Verformung zu absorbieren.

Wenn die Gefahr des Ausbrechens des Bohrloches nicht sehr groß ist, etwa weil das Wandmaterial aus sehr festem Beton besteht, wird man auch elastomere, zäh-elastische Kunststoffe als Material der Dübelhülse in Betracht ziehen.

Die Duktilitätsverteilung im Anker-Befestigungselement kann abgewandelt werden. So ist es beispielsweise möglich, einen Übergangsbereich zwischen dem Gewindeabschnitt 11 und dem Schaftabschnitt 12 vorzusehen, in welchem die Materialeigenschaft zwischen schwächer und stärker duktil allmählich übergeht. Der Übergangsbereich sollte im Bereich der Grenzfläche zwischen Anbauteil 3 und Betonwand 2 zu liegen kommen, um die Gefahr des Abscherens des Gewindebolzens 1 im Bereich des Gewindeabschnittes 11 herabzusetzen, d.h. der Gewindeabschnitt 11 sollte innerhalb der Durchsteckbohrung 30 enden.

Bei einem sogenannten Hinterschnittdübel, der in ein Bohrloch 20 mit Hinterschnitt 21 zu montieren ist (Fig. 2, 3), kann der Gewindebolzen 1 im Bereich des Dehnungsabschnittes 12 im Sinne des Gewindes 16 verlängert sein und den Spreizkörper 13 durchsetzen, um durch Drehung am Gewindebolzen 1, der eine Imbusausbildung (nicht dargestellt) aufweisen kann, eine Verschiebung des Spreizkörpers 13 gegenüber dem Gewindebolzen 1 und damit auch gegenüber der Dübelhülse 10 zu erzielen. Diese Relativverschiebung dient zur Aufspreizung der Spreizsegmente 18 im hinterschnittenen Teil 21 des Bohrloches 20. Es versteht sich, dass man bei dieser Gestaltung des Hinterschnittdübels ein örtlich hochfestes Material für das den Spreizkörper durchsetzende Gewinde 16 wählen wird.

Die Montage des Spreizankers hängt davon ab, ob es sich um Hinterschnittdübel für hinterschnittene Bohrlöcher (Fig. 2, 3) oder um selbsthinterschneidende Schwerlastdübel (Fig. 1) handelt, die einen gewissen Hinterschnitt selbst während des Setzvorganges erzeugen.

Bei einem selbsthinterschneidenden Schwerlastdübel wird ein rundzylindrisches Bohrloch 20 in einem Ankergrund vorausgesetzt, wie es in Fig. 1 dargestellt ist. Man fügt den Spreizanker mit auf dem Spreizkörper 13 aufsitzender Dübelhülse 10 in das Bohrloch 20 ein und sorgt für eine Relativverschiebung zwischen Dübelhülse 10 und Gewindebolzen 1 derart, dass das Spreizsegmentende 18 der Dübelhülse 10 sich über den Spreizkörper 13 schiebt. Für diese Tätigkeit kann ein Setzwerkzeug eingesetzt werden. Es ist aber auch möglich, unter Zwischenfügung einer Hilfshülse auf die Dübelhülse 10 mit einem Hammer zu klopfen, um die Spreizsegmente 18 ein wenig in die Bohrungswand 20 eindringen zu lassen. Alsdann kann die Ankerplatte 3 zusammen mit dem zu befestigenden Gegenstand unter Zuhilfenahme einer Unterlegscheibe 5 und der Mutter 4 am Ankergrund 2 befestigt werden. Das Anziehen des Gewindebolzens 1 führt dazu, dass sich die Spreizsegmente 18 weiter in die Bohrungswand 20 eingraben und eine gute Verankerung des Spreizankers ergeben.

Bei der Gestaltung des Spreizankers als fremdhinterschneidenden Schwerlastdübel wird das Bohrloch 20 im Ankergrund 2 mit einem Spezialbohrer hergestellt, der am Sacklochende einen Hinterschnitt 21 erzeugt, in den sich die Spreizsegmente 18 entfalten können. Dies wird durch Relativverschiebung der Dübelhülse 10 gegenüber dem Gewindebolzen 1 erzielt, und zwar dergestalt, dass sich das Spreizsegmentende 18 der Dübelhülse 10 weiter über den Spreizkörper 13 schiebt, wodurch die Spreizsegmente 18 aufspreizen und sich in den Hinterschnitt 21 legen. Dies erfolgt in prinzipiell der gleichen Weise wie bei dem selbsthinterschneidenden Schwerlastdübel. Nach Aufspreizen der Spreizsegmente 18 kann der Gewindebolzen 1 unter Anpressung der Ankerplatte 3 angezogen werden, wodurch eine Verklemmung des zwischen den Spreizsegmenten 18 und der Mutter 4 befindlichen Materials erfolgt.

Bei Erdbeben treten Gebäudeschwingungen auf, die zu erheblichen Belastungen des Anker-Befestigungselements in Längsrichtung oder in Querrichtung führen können. Wenn der befestigte Gegenstand Eigenfrequenzen aufweist, die den Erregungsfrequenzen des Erdbebens entsprechen, kann es zu einer Überbelastung des Anker-Befestigungselements führen. Dämpfen des schwingungsfähigen Systems aus befestigtem Gegenstand und Befestigungselement führt zur Verringerung der Überbelastung durch Verstimmen der Resonanzerscheinung. Das erfindungsgemäße Anker-Befestigungselement leistet dies, indem es Schwingungsenergie des Erdbebens aufnimmt und in Verformungsenergie des duktilen Schaftes des Gewindebolzens verwandelt. Beim Auftreten einer Überlast in Längsrichtung des Gewindebolzens wird der Schaftabschnitt 12 gedehnt, wie übertrieben bei ΔU in Fig. 2 dargestellt, wobei Erdbebenenergie durch plastische Verformung des Schaftes 12 dissipierend aufgenommen wird, und bei Erdbebenschwingungen quer zum Anker-Befestigungselement wird der Schaftabschnitt 12 um ΔU verschoben (Fig. 3), ebenfalls unter Aufnahme von Energie aus den Erdbebenschwingungen. Die Dauer von Erdbeben liegt gewöhnlich unter einer Minute, so dass die Summe der eingetragenen Energien während eines solchen Erdbebens nicht ausreicht, zu einem duktilen Bruch im Schaftabschnitt 12 zu führen.

Wenn bei einem Erdbebenereignis ein Anker-Befestigungselement beschädigt worden ist, muss es neutralisiert oder ersetzt werden. Bei Spreizankerkonstruktionen mit Schraubgewinde 16 zur Befestigung oder zur Verschiebung des Spreizkörpers 13 kann der Gewindebolzen 1 unter Umständen aus der Hülsenbohrung der Dübelhülse 10 herausgedreht werden, so dass ein Ersatz des Gewindebolzens möglich erscheint. Bei Konstruktionen mit fest angebrachtem Spreizkörper 13 am Gewindebolzen 1 wird man das über den Ankergrund hervorstehende Ende des Gewindebolzens abschneiden und einen neuen Spreizanker an gesunder Stelle des Ankergrundes anbringen.

## Patentansprüche

1. Anker-Befestigungselement, zur Befestigung eines Gegenstandes (3) an einer Betonwand (2), die ein Bohrloch (20) als Ankergrund aufweist, umfassend:
- einen Gewindebolzen (1) mit
-- einem Gewindeabschnitt (11) an einem ersten Ende,
-- einem Ankerabschnitt (13) am anderen, zweiten Ende, sowie
-- einem Schaftabschnitt (12) zwischen Gewindeabschnitt und Ankerabschnitt, und
- eine Mutter (4) zur Verschraubung auf dem Gewindeabschnitt (3) gegen die Betonwand (2),
**dadurch gekennzeichnet,**
**dass** der Gewindeabschnitt (11) und der Ankerabschnitt (13) einerseits und der Schaftabschnitt (12) als plastischer Dehnungsabschnitt andererseits infolge unterschiedlicher Formgebung und unterschiedlicher Materialeigenschaften unterschiedliche Duktilitäten aufweisen,
wobei der Gewindeabschnitt (11) und der Ankerabschnitt (13) eine niedrigere Duktilität mit geringerem plastischen Verformungsvermögen, und der Schaftabschnitt (12) als plastischer Dehnungsabschnitt eine höhere Duktilität mit demgegenüber höherem plastischen Verformungsvermögen aufweisen, um nach Befestigung des Gegenstandes (3) mit dem Anker-Befestigungselement an der Betonwand, Stoßbelastungen, wie sie bei Erdbeben auftreten, energiedissipierend aufzunehmen.

2. Anker-Befestigungselement nach Anspruch 1, wobei der Schaftabschnitt (12) gegenüber dem Gewindeabschnitt (11) einen verringerten Querschnitt aufweist.

3. Anker-Befestigungselement nach Ansprüchen 1 und 2,
wobei der Schaftabschnitt (12) innerhalb des Bohrlochs (20) nahe des Gewindeabschnitts (11) einen radialen Freiraum (22) vorfindet, der so groß ist, dass eine plastische Verformung gemäß einer globalen Duktilität größer 1,5 ermöglicht wird, basierend auf einer Dehnungsduktilität und einer Krümmungsduktilität des Schaftabschnittes (12), wenn dieser infolge des Ankerabschnitts (13) im Bohrloch (20) eingespannt ist.

4. Anker-Befestigungselement nach Anspruch 3, wobei die globale Duktilität im Bereich 2 bis 4 liegt.

5. Anker-Befestigungselement nach Anspruch 3, wobei die globale Duktilität größer 4 ist.

6. Anker-Befestigungselement nach einem der Ansprüche 1 bis 5, ausgebildet als Klebeanker, wobei der Ankerabschnitt (23) durch Klebung im Bohrloch (20) befestigbar ist.

7. Anker-Befestigungselement nach einem der Ansprüche 1 bis 5, weiterhin umfassend eine Dübelhülse (10), wobei die Dübelhülse (10) mit rundzylindrischem Querschnitt und mit Spreizsegmenten (18) an dem dem Ankerabschnitt (13) benachbarten Ende der Dübelhülse vorgesehen ist, um das Anker-Befestigungselement zu einem Spreizanker zu vervollständigen.

8. Anker-Befestigungselement nach Anspruch 7, wobei die Dübelhülse (10) im Bereich der Spreizsegmente (18) eine Wandverdickung (18a) aufweist, die sich wenigstens teilweise an den Ankerabschnitt (13) anschmiegt, um bei der Montage des Spreizankers (1) durch axiale Relativverschiebung zwischen der Dübelhülse (10) und dem Ankerabschnitt (13) eine Spreizung der Spreizsegmente (18) zu erzielen.

9. Anker-Befestigungselement nach einem der Ansprüche 1 bis 8, wobei der Gewindebolzen (1) aus Schmiedeeisenstahl besteht, der im Bereich des Schaftabschnittes (12) ungehärtet belassen ist.

10. Anker-Befestigungselement nach einem der Ansprüche 1 bis 8, wobei der Gewindebolzen (1) aus einer Kupferlegierung besteht, die in den Bereichen des Gewindeabschnittes (11) und des Ankerabschnittes (13) gehärtet ist.

11. Anker-Befestigungselement nach einem der Ansprüche 1 bis 10, wobei der Ankerabschnitt (13) kegelförmig und zum Schaftabschnitt (12) hin mit einem Ansatz (15) ausgebildet ist, der aus härterem Material gegenüber dem Schaftabschnitt (12) besteht.

12. Anker-Befestigungselement nach einem der Ansprüche 1 bis 11, wobei der Ankerabschnitt (13) einen bezüglich des Gewindebolzens (1) separaten Ankerkörper darstellt, der mit einem Schraubgewinde am zweiten Ende des Gewindebolzens (1) zusammen arbeitet.

## Claims

1. An anchor fastening element for fastening an item (3) to a concrete wall (2) which has a drilled hole (20) as an anchoring base, comprising:
- a threaded bolt (1) having
-- a threaded portion (11) at a first end,
-- an anchor portion (13) at the other, second end, and
-- a shank portion (12) between the threaded portion and the anchor portion; and
- a nut (4) to be screwed on the threaded portion (11) against the concrete wall (2); **characterised in that**
the threaded portion (11) and the anchor portion (13) on the one hand and the shank portion (12) as a plastic stretching portion on the other exhibit different ductilities due to different shaping and different material properties,
the threaded portion (11) and the anchor portion (13) having a lower ductility with less plastic deformation capacity, and the shank portion (12) as the plastic stretching portion having a higher ductility with higher plastic deformation capacity for absorbing impact loads such as occurring during earthquakes, in an energy dissipating manner, once the item (3) has been fastened to the concrete wall (2) by means of the anchor fastening element.

2. The anchor fastening element according to claim 1, wherein the shank portion (12) has a reduced cross section as compared to that of the threaded portion (11).

3. The anchor fastening element according to claims 1 and 2, wherein the shank portion (12) finds a radial clearance (22) within the drilled hole (20) near the threaded portion (11), which is sufficiently large to allow for a plastic deformation corresponding to a global ductility of greater than 1.5 based on a stretching ductility and a bending ductility of the shank portion (12) when the latter is clamped in the drilled hole (20) due to the anchor portion (13).

4. The anchor fastening element according to claim 3, wherein the global ductility ranges from 2 to 4.

5. The anchor fastening element according to claim 3, wherein the global ductility is greater than 4.

6. The anchor fastening element according to any one of claims 1 to 5, which is formed as an adhesive anchor, wherein the anchor portion (23) can be fastened adhesively in the drilled hole (20).

7. The anchor fastening element according to any one of claims 1 to 5, further comprising an anchor sleeve (10) which is a cylindrical anchor sleeve (10) having a round cross section and spreading segments (18) at the end of the anchor sleeve adjacent the anchor portion (13) in order to complement the anchor fastening element to constitute a spreading anchor.

8. The anchor fastening element according to claim 7, wherein the anchor sleeve (10) has a thickened wall (18a) in the region of the spreading segments (18), which at least partially engages the anchor portion (13) in order to achieve spreading of the spreading segments (18) upon installation of the spreading anchor (1) by a relative axial displacement between the anchor sleeve (10) and the anchor portion (13).

9. The anchor fastening element according to any one of claims 1 to 8, wherein the threaded bolt (1) is made of wrought iron steel which remains unhardened in the region of the shank portion (12).

10. The anchor fastening element according to any one of claims 1 to 8, wherein the threaded bolt (1) is made of a copper alloy which has been hardened in the region of the threaded portion (11) and the anchor portion (13).

11. The anchor fastening element according to any one of claims 1 to 10, wherein the anchor portion (13) is cone-shaped and has a shoulder (15) towards the shank portion (12), which comprises a material harder than that of the shank portion (12).

12. The anchor fastening element according to any one of claims 1 to 11, wherein the anchor portion (13) is an anchor body separate from the threaded bolt (1), which cooperates with a screw thread on the second end of the threaded bolt (1).

## Revendications

1. Elément de fixation à tige d'ancrage, destiné à la fixation d'un objet (3) sur une paroi en béton (2) qui présente un trou de perçage (20) en tant que support d'ancrage, comprenant :
- une tige filetée (1) comportant
-- une partie filetée (11) à une première extrémité,
-- une partie d'ancrage (13) à l'autre extrémité, à savoir la deuxième extrémité, et
-- une partie de fût (12) entre la partie filetée et la partie d'ancrage, et
- un écrou (4) destiné à être vissé sur la partie filetée (3), contre la paroi en béton (2),
**caractérisé en ce que**
la partie filetée (11) et la partie d'ancrage (13), d'une part, et la partie de fût (12), en tant que partie de dilatation plastique, d'autre part, présentent des ductilités différentes, en raison de mises en forme différentes et de propriétés de matériau différentes,
la partie filetée (11) et la partie d'ancrage (13) présentant une ductilité plus faible, avec une capacité de déformation plastique plus faible, et la partie de fût (12), en tant que partie de dilatation plastique, présentant une ductilité plus élevée, avec une capacité de déformation plastique plus élevée correspondante, afin d'absorber, après fixation de l'objet (3) sur la paroi en béton, à l'aide de l'élément de fixation à tige d'ancrage, des charges d'impact telles qu'elles apparaissent lors de tremblements de terre, en dissipant l'énergie.

2. Elément de fixation à tige d'ancrage selon la revendication 1, dans lequel la partie de fût (12) présente une section transversale réduite par rapport à la partie filetée (11).

3. Elément de fixation à tige d'ancrage selon la revendication 1 et 2, dans lequel la partie de fût (12) se trouve, à l'intérieur du trou de perçage (20), à proximité de la partie filetée (11), dans un espace libre (22) radial qui est si grand qu'une déformation plastique selon une ductilité globale supérieure à 1,5 est possible, sur la base d'une ductilité de dilatation et d'une ductilité de courbure de la partie de fût (12), lorsque celle-ci est serrée dans le trou de perçage (20) en raison de la partie d'ancrage (13).

4. Elément de fixation à tige d'ancrage selon la revendication 3, dans lequel la ductilité globale est comprise dans la plage allant de 2 à 4.

5. Elément de fixation à tige d'ancrage selon la revendication 3, dans lequel la ductilité globale est supérieure à 4.

6. Elément de fixation à tige d'ancrage selon l'une des revendications 1 à 5, réalisé comme élément d'ancrage adhésif, dans lequel la partie d'ancrage (23) peut être fixée par collage dans le trou de perçage (20).

7. Elément de fixation à tige d'ancrage selon l'une des revendications 1 à 5, comprenant en outre une douille de cheville (10), la douille de cheville (10) étant prévue avec une section transversale cylindrique circulaire et avec des segments expansibles (18) à l'extrémité de la douille de cheville qui est adjacente à la partie d'ancrage (13), afin de compléter l'élément de fixation à tige d'ancrage et en faire un élément d'ancrage à expansion.

8. Elément de fixation à tige d'ancrage selon la revendication 7, dans lequel la douille de cheville (10) présente, dans la région des segments expansibles (18), une surépaisseur de paroi (18a) qui épouse au moins partiellement la partie d'ancrage (13), afin d'obtenir un écartement des segments expansibles (18) lors du montage de l'élément d'ancrage à expansion (1), par déplacement relatif axial entre la douille de cheville (10) et la partie d'ancrage (13).

9. Elément de fixation à tige d'ancrage selon l'une des revendications 1 à 8, dans lequel la tige filetée (1) est constituée d'acier de fer forgé qui est laissé à l'état non trempé dans la région de la partie de fût (12).

10. Elément de fixation à tige d'ancrage selon l'une des revendications 1 à 8, dans lequel la tige filetée (1) est constituée d'un alliage de cuivre qui est trempé dans les régions de la partie filetée (11) et de la partie d'ancrage (13).

11. Elément de fixation à tige d'ancrage selon l'une des revendications 1 à 10, dans lequel la partie d'ancrage (13) est réalisée sous forme de cône et avec un prolongement (15), côté partie de fût (12), qui est constitué d'un matériau plus dur que la partie de fût (12).

12. Elément de fixation à tige d'ancrage selon l'une des revendications 1 à 11, dans lequel la partie d'ancrage (13) constitue un corps d'ancrage séparé par rapport à la tige filetée (1), qui coopère avec un filetage sur la deuxième extrémité de la tige filetée (1).
